# DEMANDE DE BREVET EUROPEEN

(11) **EP 3 677 333 A1**
(43) Date de publication de la demande: **08.07.2020**
(21) Numéro de dépôt: 20150112.9
(22) Date de dépôt: 02.01.2020
(51) Int. Cl.: B01J 8/00

(54) **DISTRIBUTION DE PARTICULES SOLIDES DANS UNE ENCEINTE**

(30) Priorité: 04.01.2019 FR 1900051
(71) Demandeur: Petroval, 76430 Saint-Romain-de-Colbosc (FR)
(72) Inventeur: GIRARD, Olivier, 24300 ABJAT SUR BANDIAT (FR); GUERRAND, François, 76600 LE HAVRE (FR); STANDER, Adriaan, 76290 FONTENAY (FR); GALASSINI, Giuseppe, 00047 MARINO ROME (IT)
(74) Mandataire: Casalonga

(57) **Abrégé**

Un dispositif de distribution (20) de particules solides (22) pour charger en particules solides une enceinte, comprenant une trémie (21) d'alimentation en particules solides, un organe tournant et un organe moteur pour entrainer en rotation ledit organe tournant autour d'un axe de rotation, et un jeu d'au moins un élément déflecteur (25, 25',25") porté par ledit l'organe tournant et dressé, ou susceptible d'être dressé lors de la rotation de l'arbre, par rapport à l'axe de rotation,
dans lequel la trémie d'alimentation définit un jeu d'au moins une ouverture (29) conformé de façon asymétrique par rapport à l'axe de rotation, définissant au plus un plan de symétrie passant par l'axe de rotation.

## Description

L'invention concerne la distribution de particules solides dans une enceinte, et en particulier dans un réacteur.

Il est connu de charger des réacteurs, notamment de type chimique, électrochimique, pétrolier ou pétrochimique, avec des particules solides à l'état divisé. Ces particules peuvent par exemple se présenter sous forme de billes, de grains, de cylindres, de pastilles, de bâtonnets ou de toute autre forme et ont en général des dimensions relativement faibles.

Les particules peuvent être en particulier des grains de catalyseurs solides, généralement extrudés réalisés soit sous forme régulière, soit sous forme de bâtonnets mono ou multilobes, dont les dimensions peuvent varier selon les cas de quelques dixièmes de millimètres à quelques centimètres.

On cherche à charger dans un espace réduit et en un temps réduit un grand nombre de particules solides de façon homogène et la plus uniforme possible.

C'est à cette application, dite de « chargement dense », de grains de catalyseurs dans un réacteur chimique que l'on se référera plus particulièrement dans la suite de la présente description. Par « chargement dense », on entend ici un chargement par effet de pluie effectué de façon à concilier espace réduit, temps de chargement faible, densité élevée, homogénéité et uniformité.

Mais le dispositif décrit peut plus généralement trouver des applications dans le cadre d'un chargement de particules solides dans un réacteur ou autre enceinte.

On connaît un certain nombre de procédés et de dispositifs permettant d'augmenter la densité d'un lit fixe de particules de catalyseur dans un réacteur chimique.

On pourra citer par exemple le document WO 2010/076522 (Cottard et al.). Le dispositif décrit, comprenant un arbre tournant et des éléments déflecteurs est avantageux en ce sens qu'il peut être introduit dans le réacteur via un orifice de relativement faible section, les éléments déflecteurs semi-rigides se dressant ensuite lors de la rotation de l'organe tournant.

Les dispositifs du type de celui décrit dans le document WO 2010/076522, ont en commun l'introduction des particules à charger par le sommet du réacteur et la collision des particules individuelles, lors de leur chute, avec des déflecteurs mécaniques, provoquant une déviation aléatoire des dites particules. Idéalement, les particules ainsi détournées de leur trajet de chute verticale tombent individuellement et librement par effet de pluie sur l'ensemble de la surface du front de remplissage où elles forment un dépôt dense et homogène.

Classiquement, le dispositif de distribution est installé dans une ouverture de remplissage du réacteur situé en haut du réacteur et au centre du réacteur, ce qui peut s'avérer gênant pour d'autres opérations.

Par exemple, on peut disposer une ou plusieurs sondes (ou capteurs) de mesure à l'intérieur du réacteur afin de mesurer le niveau de particules solides déjà tombées dans le réacteur notamment pendant le remplissage. Plus généralement, on installe des sondes à l'intérieur du réacteur afin de mesurer des paramètres relatifs au suivi du chargement des particules solides dans l'enceinte.

L'installation dans le réacteur d'un tel système de distribution, incluant notamment le dispositif de distribution et les supports de sonde, peut néanmoins être relativement délicate à effectuer. L'une des contraintes principales à laquelle les opérateurs de ce type de matériel peuvent être confrontés est liée à l'encombrement interne parfois extrême d'un réacteur qui peut contenir des plateaux, des thermocouples et des supports pour ces éléments. Cette contrainte est donc liée au faible espace dont les opérateurs disposent pour manœuvrer le dispositif de distribution en vue de son installation et de ses réglages.

Il existe donc un besoin pour un système de distribution de particules solides moins contraignant en matière d'encombrement.

Il est proposé un dispositif de distribution de particules solides pour charger en particules solides une enceinte, par exemple un réacteur, comprenant :
- une trémie d'alimentation en particules solides, définissant un jeu d'au moins une ouverture d'évacuation des particules hors de la trémie sous l'effet de la gravité,
- un organe tournant et un organe moteur couplé audit organe tournant pour entrainer en rotation ledit organe tournant autour d'un axe de rotation ayant une direction avec une composante suivant la direction du vecteur de gravité, par exemple un axe de rotation parallèle au vecteur gravité,
- en aval du jeu d'au moins une ouverture de la trémie d'alimentation, un jeu d'au moins un élément déflecteur porté par ledit organe tournant, dressé par rapport à l'axe de rotation ou susceptible d'être dressé par rapport à l'axe de rotation.

Selon l'invention, le jeu d'au moins une ouverture de la trémie d'alimentation est conformé de façon asymétrique par rapport à l'axe de rotation, définissant au plus un plan de symétrie passant par l'axe de rotation.

Ce jeu d'au moins une ouverture peut être conformé de sorte que, pour au moins un plan normal à l'axe de rotation et situé sous le jeu d'au moins une ouverture (avantageusement entre ce jeu d'au moins une ouverture et le jeu d'au moins un élément déflecteur), le débit de particules tombantes au travers d'un premier secteur angulaire dans ledit plan et dont le sommet est sur l'axe de rotation soit strictement plus élevé que le débit de particules tombantes au travers d'un deuxième secteur angulaire dans ce plan et dont le sommet est sur l'axe de rotation, le premier et le deuxième secteur angulaire ayant une même valeur d'angle et étant disjoints.

Par exemple, le jeu d'au moins une ouverture peut être réparti de façon symétrique relativement à une trémie cylindrique à base circulaire, par exemple dans le cas où l'axe de rotation est différent de l'axe de symétrie de la trémie. Notamment, ces deux axes peuvent être parallèles. Le débit de particules d'un côté de l'axe de rotation est plus élevé que de l'autre côté.

La trémie peut par exemple avoir un profil non circulaire, par exemple elliptique ou rectangulaire.

On peut aussi prévoir une trémie avec un profil circulaire et un jeu d'au moins une ouverture ayant un jeu d'au moins une section efficace conformée(s) de façon asymétrique par rapport à l'axe de rotation, de façon à favoriser au moins une direction d'évacuation de particules par rapport à une autre.

Le jeu d'au moins une ouverture(s) peut être défini dans une paroi ou des parois latérale(s) de la trémie et/ou dans un fond de la trémie.

On peut par exemple prévoir une pluralité d'ouvertures de tailles différentes, comprenant notamment des ouvertures plus grandes d'un côté de la trémie que de l'autre côté. Cette ou ces asymétrie(s) permettent de favoriser une ou des direction(s) de distribution des particules aux dépens d'une autre ou d'autres.

Aussi, en installant le dispositif de distribution de façon excentrée par rapport à un axe vertical central de l'enceinte, on peut parvenir à un chargement relativement homogène. Cette installation excentrée peut permettre de libérer de l'espace pour d'autres éléments, par exemple des sondes. L'invention permet ainsi de combiner chargement dense et compacité.

En outre, en permettant ainsi de libérer de la place au centre de l'enceinte, l'invention peut permettre un meilleur suivi du chargement car il s'est avéré que les mesures effectuées au moyen de capteurs positionnés de façon relativement centrale étaient plus fiables que si les capteurs étaient excentrés.

Par exemple, on peut prévoir une ouverture formant bandeau, avec une hauteur variable selon la position angulaire sur la paroi de la trémie, de sorte que les particules tombent préférentiellement suivant une (ou des) direction(s), aux dépens d'une autre ou d'autres.

Dans un mode de réalisation, au moins une ouverture peut être ajustée individuellement, par exemple au moyen d'un volet ou autre. Ceci peut permettre d'ajuster les variations de débits avec la position angulaire, et donc de mieux s'adapter à au positionnement choisi dans l'enceinte.

Le jeu d'au moins un élément déflecteur peut éventuellement définir plusieurs axes de symétrie passant par l'axe de rotation, et la vitesse de rotation peut être constante sur au moins un tour.

Mais avantageusement, le jeu d'au moins un élément déflecteur peut être agencé de sorte que lorsque dressé par rapport à l'axe de rotation, les projections dudit jeu dans un plan normal à l'axe de rotation de l'organe tournant ont une distribution asymétrique autour dudit axe de rotation, définissant au plus un plan de symétrie passant par l'axe de rotation.

Avantageusement, l'organe moteur peut être agencé pour que l'organe tournant auquel il est couplé effectue un mouvement avec des variations de vitesse angulaire sur une plage angulaire de 360° ou moins.

On peut par exemple prévoir une vitesse rapide sur une plage angulaire de moins de 350° et une vitesse lente sur la plage restante. Ainsi, au cours d'un tour, on peut modifier le taux de rebonds (par abus de langage, on parle de perméabilité aux particules des éléments déflecteurs), car les rebonds sur ces éléments déflecteurs dépendent de la vitesse des éléments déflecteurs, ce qui peut permettre de favoriser certaines directions de distribution aux dépens d'autres.

Avantageusement toutefois, l'organe moteur peut être agencé pour que l'organe tournant auquel il est couplé effectue un mouvement oscillant avec des inversions de sens de rotation aux extrémités d'une plage angulaire de 360° ou moins, avantageusement 350° ou moins.

Par exemple, l'organe tournant peut effectuer ainsi des mouvements de va-et-vient, passant d'un sens de rotation au sens inverse, sur des plages angulaires de 350° ou moins, avantageusement sur 330° ou moins, avantageusement sur 320° ou moins, avantageusement sur 310° ou moins, avantageusement sur 270° ou moins.

Ainsi, en combinant plage angulaire de plus grande déflection et rotations sur une course limitée, on peut favoriser les directions de déviation correspondant à cette plage angulaire : en installant ce dispositif non plus sur un axe de symétrie ou central de l'enceinte, par exemple un réacteur, mais de façon excentrée, on peut parvenir à concilier chargement uniforme et plus faible encombrement. De l'espace peut ainsi être libéré pour l'installation d'autres équipements, par exemple de capteurs.

Dans l'art antérieur, les éléments déflecteurs peuvent comprendre des lanières en matériau semi-rigide, répartis de façon régulière sur la circonférence d'un arbre rotatif. Les lanières sont bien entendu des éléments discrets, mais si l'on effectue un lissage, par exemple une moyenne sur 20° ou 30° (ou pour être rigoureux, sur 720° divisé par le nombre de lanières, par exemple sur 120° dans le cas de 6 lanières, des longueurs des lanières lorsque normales à l'axe de rotation, on arrive à une distribution isotrope sur 360°. Les projections des lanières définissent deux, trois, quatre ou davantage plans de symétrie.

Avec le dispositif décrit ci-dessus, lorsque les éléments déflecteurs sont dressés par rapport à l'axe de rotation, leurs projections dans un plan normal à l'axe de rotation ne définissent aucun plan de symétrie passant par l'axe de rotation ou bien un seul.

En particulier, une distribution en lobe peut définir un unique plan de symétrie passant par l'axe de rotation, ou bien aucun plan de symétrie selon la forme du lobe.

Dans un mode de réalisation, on peut prévoir un seul élément déflecteur.

Cet élément déflecteur peut s'étendre sur 360° autour de l'axe de rotation, avec une longueur suivant la direction radiale variant de façon à définir une plage angulaire de plus grande déflection. Cet élément déflecteur pourra par exemple être réalisé en matériau souple ou rigide.

Alternativement, cet unique élément déflecteur peut s'étendre sur une plage restreinte, par exemple sur 270°, sur 180°, ou bien encore sur 60° ou moins. La longueur suivant la direction radiale peut être identique sur toute cette plage restreinte, ou varier.

Dans un autre mode de réalisation, le jeu peut comprendre une pluralité d'éléments déflecteurs, qui peuvent être de tailles différentes.

Chaque élément déflecteur peut par exemple occuper une plage angulaire entre 1° et 30°, avantageusement entre 5° et 20°, par exemple de l'ordre de 10°.

Dans un mode de réalisation, on peut prévoir des éléments déflecteurs sur toute la périphérie de l'organe tournant, mais avec par exemple des espacements entre éléments déflecteurs voisins, des longueurs et/ou des matériaux variables d'un élément déflecteur à l'autre.

Les éléments déflecteurs peuvent être répartis sur une plage angulaire restreinte seulement, par exemple une plage s'étendant sur moins de 320°, avantageusement sur moins de 280°, 180° ou de 120°, mais avantageusement sur plus de 5°.

Les éléments déflecteurs peuvent être régulièrement répartis au sein de cette plage angulaire restreinte, ou non.

Les éléments déflecteurs répartis sur cette plage angulaire restreinte peuvent être réalisés dans des matériaux identiques, ou non.

Les éléments déflecteurs répartis sur cette plage angulaire restreinte peuvent avoir une longueur (suivant la direction radiale) identique, ou non.

Avantageusement, la pluralité d'éléments déflecteurs peut comprendre au moins un élément déflecteur court et au moins un élément déflecteur long, chaque élément déflecteur long ayant une longueur suivant la direction radiale plus élevée que la longueur d'un élément déflecteur court.

Dans un mode de réalisation, la pluralité d'éléments déflecteurs répartis seulement sur la plage angulaire restreinte peut comprendre deux éléments déflecteurs courts aux extrémités respectives de cette plage angulaire restreinte et au moins un élément déflecteur long entre ces deux éléments déflecteurs courts.

Dans un autre mode de réalisation, on peut prévoir entre quatre et douze éléments déflecteurs répartis sur 360°. Par exemple, le jeu d'éléments déflecteurs peut comprendre des éléments déflecteurs de longueurs variées.

L'invention n'est pas limitée à une forme particulière des éléments déflecteurs.

Avantageusement, au moins un élément déflecteur peut définir avec l'organe tournant une liaison articulée, de sorte que cet élément déflecteur puisse passer d'une position d'introduction dans l'enceinte à une position dressée par rapport à l'axe de rotation indépendamment de la rotation de l'organe tournant.

En particulier, le dispositif peut ainsi comprendre au moins un organe de tringlerie coopérant avec au moins un élément déflecteur de façon à pouvoir faire passer cet élément déflecteur de la position d'introduction dans l'enceinte à la position dressée par rapport à l'axe de rotation lorsqu'une tige de cet organe de tringlerie est actionnée, par exemple tirée vers le haut ou vers le bas.

Par exemple, au moins un élément déflecteur peut être réalisé en un matériau rigide.

Par exemple, un élément déflecteur rigide peut comprendre une tige rigide définissant avec l'organe tournant une liaison articulée, de sorte que cet élément déflecteur rigide puisse passer d'une position d'introduction dans l'enceinte à une position dressée par rapport à l'axe de rotation. Ce passage peut être effectué du simple fait de la rotation, ou non.

En position d'introduction dans l'enceinte, l'élément déflecteur peut être parallèle ou légèrement incliné par rapport à l'axe de rotation (formant avec cet axe un angle avantageusement compris entre 0 et 30°).

Selon un autre exemple, au moins un élément déflecteur peut comprendre une lanière en un matériau souple ou semi-rigide.

Les lanières peuvent être réalisées par exemple en plastique rigide, par exemple en PVC (pour Polychlorure de Vinyle) en caoutchouc, en caoutchouc armé, ou autre.

En particulier, on pourra prévoir une âme aluminium et un enrobage ou une matrice de caoutchouc.

Avantageusement, le mouvement oscillant peut être réalisé sur une plage angulaire de 360° ou moins, avantageusement sur 300° ou moins.

Le mouvement de va-et-vient peut avantageusement être périodique, c'est-à-dire que le mouvement peut être identique pendant plusieurs secondes, avantageusement pendant plusieurs minutes.

La période peut être de l'ordre de quelques fractions de seconde, par exemple de l'ordre du centième ou du dixième de seconde, ou bien encore de l'ordre de la seconde par exemple.

Avantageusement, l'organe moteur peut être agencé pour que la vitesse angulaire de l'organe tournant représente au moins 80% de son maximum, au moins 80% du temps, avantageusement au moins 90% ou 95% du temps. Les passages à zéro sont donc relativement abrupts, ce qui peut être avantageux dans le cas d'éléments déflecteurs se dressant grâce à la force centrifuge.

De façon connue en soi, la répartition des particules chargées est fonction de la vitesse angulaire.

On pourrait aussi prévoir un mouvement oscillant relativement élaboré, avec par exemple un balayage d'une plage angulaire étendue toutes les périodes, et un balayage d'une plage angulaire circonscrite dans la plage angulaire étendue plusieurs fois par période. Sur un laps de temps de plusieurs périodes, les éléments déflecteurs sont statistiquement présents plus longtemps dans la plage angulaire circonscrite.

L'organe moteur peut comprendre un moteur piloté pour effectuer un mouvement avec des variations de vitesse angulaire sur une plage angulaire de 360° ou moins, par exemple un mouvement oscillant. Le dispositif peut alors comprendre des moyens de traitement, du type microcontrôleur par exemple, pour piloter le moteur.

L'organe moteur peut comprendre par exemple un moteur pas à pas.

Les moyens de traitement pour piloter le moteur électrique, par exemple un microcontrôleur ou autre, peuvent être programmés pour piloter le moteur électrique de façon à lui imposer un mouvement oscillant.

Ces moyens de traitement peuvent être embarqués avec le moteur, ou bien rester en dehors du réacteur.

L'invention n'est pas limitée à une forme particulière des moyens de traitement pourvu qu'ils assurent le mouvement de va-et-vient décrit ci-dessus.

Dans un autre mode de réalisation, l'organe moteur peut comprendre un moteur piloté pour effectuer un mouvement de rotation continu, par exemple un moteur électrique ou autre, et des éléments de conversion du mouvement de rotation continu du moteur en un mouvement avec des variations de vitesse angulaire sur une plage angulaire de 360° ou moins, par exemple un mouvement oscillant limité à une plage angulaire de 360° ou moins, avantageusement de 350° ou moins. Ces éléments de conversion peuvent coopérer avec le moteur d'une part et avec l'organe tournant d'autre part. Ces éléments de conversion peuvent par exemple comprendre un galet, une came, et/ou d'autres éléments de conversion de mouvement bien connus de l'homme du métier, coopérant avec un arbre du moteur et avec l'organe tournant.

En particulier, les éléments de conversion peuvent comprendre un galet excentrique avec une patte déportée ayant à son extrémité un pion positionné dans une ouverture de façon à transformer le mouvement rotatif en un mouvement oscillant, à la manière d'une horloge à balancier.

L'organe moteur peut comprendre un moteur pneumatique avec un mouvement mécanique.

L'axe de rotation et la trémie d'alimentation peuvent par exemple être coaxiaux, ou non. En particulier, dans le cas d'un jeu d'au moins une ouverture asymétrique, on peut prévoir un axe de rotation déporté par rapport à la ou les ouverture(s) de ce jeu.

Le dispositif de distribution peut comprendre un arbre tournant coopérant ou d'une seule pièce avec l'organe moteur et/ou l'organe tournant.

Cet arbre peut être reçu dans la trémie d'alimentation ou non. On pourra par exemple prévoir une trémie d'alimentation légèrement déportée par rapport à l'arbre.

Les éléments déflecteurs peuvent être fixés à des hauteurs différentes les uns des autres, par exemple sur plusieurs étages, ou non.

Dans le cas d'éléments déflecteurs répartis sur plusieurs étages, on pourra prévoir une répartition en quinconce d'un étage à l'autre, ou non.

Il est en outre proposé un ensemble comprenant une enceinte définissant lorsque posée sur un sol horizontal un axe central vertical, et un dispositif tel que décrit ci-dessus, installé dans ladite enceinte à un emplacement excentré par rapport audit axe central vertical.

L'enceinte peut être un réacteur ou autre.

Le réacteur peut être de type chimique, électrochimique, pétrolier ou pétrochimique, ou non.

Le réacteur peut être adapté pour contenir des réactifs et des produits au cours d'une réaction catalytique.

L'enceinte peut présenter dans sa partie supérieure un orifice de même diamètre qu'un diamètre maximal de l'enceinte, ou avantageusement de plus faible diamètre.

Le diamètre maximal de l'enceinte peut être de l'ordre de quelques mètres, ou alternativement de l'ordre du mètre ou moins.

Le diamètre de l'orifice peut par exemple être de l'ordre de quelques mètres, du mètre ou du décimètre. Dans ce dernier cas, il peut être particulièrement avantageux de prévoir plusieurs éléments déflecteurs rigides repliables.

Il est en outre proposé un procédé d'installation d'un dispositif de distribution de particules solides tel que décrit ci-dessus dans une enceinte, par exemple un réacteur, définissant un orifice dans sa partie supérieure, dans lequel on fait passer par ledit orifice au moins l'organe tournant et le jeu d'au moins un élément déflecteur à une position excentrée par rapport à un axe central de l'enceinte. L'installation s'effectue via un orifice défini dans la partie supérieure de l'enceinte.

Cet orifice peut dans un mode de réalisation présenter es dimensions relativement réduites, et être excentré.

L'invention a enfin pour objet une méthode de chargement de particules solides dans une enceinte comprenant un axe de symétrie central vertical, de préférence un réacteur catalytique. Ladite méthode comprend :
a) l'installation dans l'enceinte d'un dispositif de distribution tel que décrit ci-avant, via une ouverture de l'enceinte définie dans sa partie supérieure, de préférence à un emplacement excentré par rapport à l'axe central ; puis
b) l'entrainement en rotation de l'organe tournant dudit dispositif ; et
c) le chargement des particules en les introduisant dans la trémie d'alimentation du dispositif, tout en maintenant l'organe tournant en rotation.

Selon un mode de réalisation préféré, l'organe tournant effectue un mouvement oscillant (c'est-à-dire, un mouvement de va et vient) avec des inversions de sens de rotation aux extrémités d'une plage angulaire étendue sur 350° ou moins, de préférence 330° ou moins, plus préférentiellement 320° ou moins, mieux 310° ou moins, et mieux encore 270° ou moins.

Dans la présente demande les termes « haut » « bas » « supérieur « inférieur » « vertical » « horizontal », « latéral » « dessus » « dessous » etc. sont définis au sens classique de ces termes (c'est-à-dire que la direction verticale et la direction du vecteur gravité, ce vecteur gravité étant orienté du haut vers le bas), pour une enceinte placée dans des conditions normales d'utilisation, c'est-à-dire avec son axe longitudinal orienté suivant la direction du vecteur gravité. Bien entendu, l'objet revendiqué est susceptible d'être orienté différemment, notamment lors de son transport.

De manière générale, dans la présente demande, par « un », on entend « un ou davantage ».

En particulier, l'invention peut trouver une application dans les réacteurs de faibles dimensions, par exemple de quelques dizaines de centimètres de haut et avec une ouverture de quelques centimètres de diamètre. Ces réacteurs peuvent être adaptés pour une réaction catalytique.

L'invention n'est toutefois pas limitée à cette application. On pourra par exemple prévoir un réacteur de plusieurs mètres de hauteur et de diamètre.

L'invention sera mieux comprise en référence aux figures, lesquelles illustrent des modes de réalisation non limitatifs.
[FIG 1] représente schématiquement un ensemble comprenant un réacteur et d'un exemple de dispositif de distribution de particules solides selon l'art antérieur.
[FIG 2] est une vue du dessous et schématique d'un exemple d'ensemble selon l'art antérieur, lorsqu'en mouvement.
[FIG 3] est une vue du dessus et schématique d'un exemple d'ensemble selon un mode de réalisation, lorsqu'en mouvement.
[FIG 4] est une vue en coupe et schématique d'un exemple de dispositif de distribution de particules solides selon un autre mode de réalisation, lorsqu'en mouvement.
[FIG 5] est une vue en perspective et schématique d'une partie d'un exemple de dispositif de distribution de particules solides selon un autre mode de réalisation, à l'arrêt ou à faible vitesse de rotation.
[FIG 6] est une vue en coupe, dans un plan vertical, d'une partie d'un exemple d'ensemble selon un mode de réalisation de l'invention.
[FIG 7A] est une vue en perspective et schématique d'une partie d'un exemple de dispositif de distribution de particules solides selon un autre mode de réalisation, avec les éléments déflecteurs en position d'introduction dans l'enceinte.
[FIG 7B] est une vue en perspective et schématique d'une partie de l'exemple de dispositif de distribution de particules solides de la figure 7A, à l'arrêt ou à faible vitesse de rotation.
[FIG 8] est une vue très schématique d'un d'une partie d'un exemple de dispositif de distribution de particules solides selon un autre mode de réalisation, à l'arrêt ou à faible vitesse de rotation.

Des références identiques peuvent être utilisées d'une figure à l'autre pour désigner des éléments identiques ou similaires.

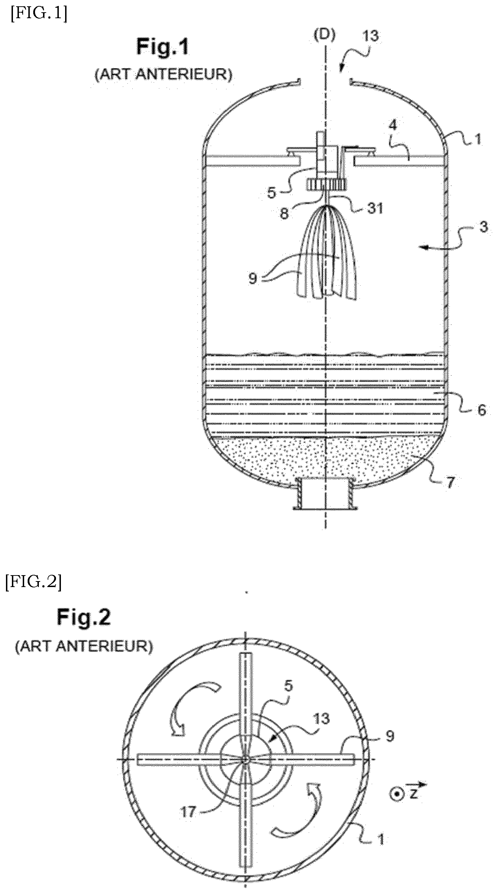

En référence à la figure 1, un réacteur 1 définit une ouverture 13, dite orifice, pour le passage notamment d'un dispositif de distribution 3 de particules solides 6, 7.

Le dispositif de distribution 3 peut par exemple être du type de celui décrit dans le document WO 2010/076522.

Dans l'exemple représenté, le dispositif de distribution repose sur un plateau 4 du réacteur 1, grâce à des bras.

Le dispositif 3 comporte en outre des lanières semi-rigides 9 pour mieux répartir les particules solides. Ces lanières semi-rigides 9 sont fixées chacune par une extrémité à un arbre 31 s'étendant le long d'un axe vertical (D) au travers d'une trémie 5 d'alimentation en particules solides 5.

Cette trémie peut être raccordée à une réserve de particules solides non représentée, de façon connue en soi.

Lors du chargement, les particules solides s'écoulent via des ouvertures 8 définie à une extrémité de la trémie, situées au-dessus des lanières 9.

En outre, l'arbre 31 est entraîné en rotation par un moteur non représenté, de sorte que les lanières s'écartent angulairement de l'arbre.

Les particules chutant depuis la trémie 5 sont susceptibles de rebondir sur ces lanières, et d'être ainsi déviées de leur trajectoire. Ces déviations relativement aléatoires peuvent permettre d'assurer un chargement dense en particules solides.

Le dispositif de distribution 3 permet le chargement du réacteur 1 en billes inertes 6, et également en particules de catalyseur 7.

Par produits chargés dans le réacteur, ou chargement du réacteur, on entend les particules solides distribuées dans le réacteur par le dispositif de distribution, par exemple les lits 6, 7, de la figure 1, les réactifs et produits au sens chimique du terme, et/ou autre.

En référence à la figure 2, un dispositif de distribution de particules solides du type connu de l'art antérieur est représenté installé dans un réacteur 1, au travers d'une ouverture 13 de ce réacteur.

Ce dispositif comprend une trémie 5, traversée en sur son axe central par un arbre 17.

Cet arbre 17 s'étend vers le bas au-delà de la trémie 5, et sur une partie d'extrémité sont montées quatre lanières identiques, et réparties de façon régulière sur la circonférence de l'arbre.

Lorsque comme représenté sur la figure 2, l'arbre est entrainé en rotation, les lanières se dressent par rapport à l'arbre. La vitesse angulaire est constante au moins sur une dizaine de tours, typiquement sur des durées relativement longues. Les lanières sont ainsi susceptibles de dévier une grande quantité de particules solides, sans direction préférentielle du fait des symétries dans la répartition des pâles et de l'absence d'inversion du sens de rotation.

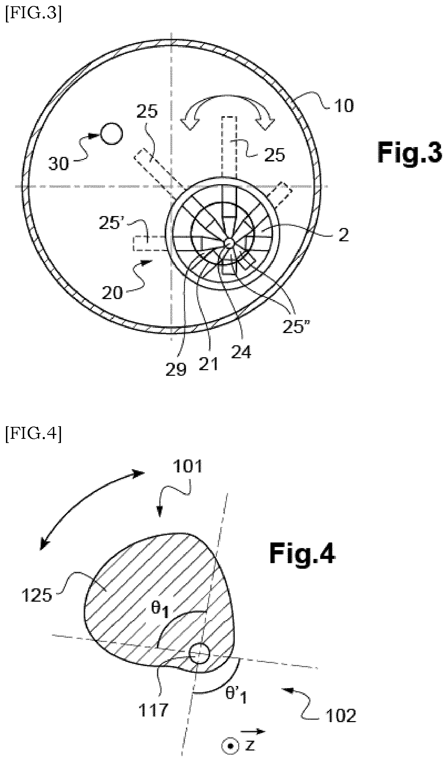

En référence à la figure 3, on a représenté un exemple de dispositif de distribution de particules solides 20 selon un mode de réalisation, lorsqu'installé dans un réacteur 10 conformément à un procédé selon un mode de réalisation de l'invention.

Ce dispositif de distribution de particules solides 20 comprend une trémie 21, par exemple de 8 cm de diamètre, reçue dans un orifice 2 du réacteur, de par exemple 10 ou 12 centimètres de diamètre.

La trémie 21 est traversée par un arbre 24 s'étendant vers le bas au-delà d'une ouverture 29 occupant la totalité du fond de la trémie cylindrique 21, pour le passage des particules solides (non représentées) circulant dans la trémie 21.

On pourra relever que l'arbre 24 et la trémie 21 ne sont pas concentriques, l'arbre 24 étant excentré par rapport à un axe central de symétrie de la trémie 21. En conséquence l'ouverture 29 est conformée de façon asymétrique relativement à cet arbre 24, de sorte que le débit de particules solides sera plus élevé d'un côté de l'arbre que de l'autre.

Dans cet exemple, huit lanières 25, 25',25" sont montées sur cet arbre 24.

Dans cet exemple, ces lanières comprennent chacune une âme d'aluminium (non représentée), entourée d'une gaine de caoutchouc.

Les lanières 25, 25', 25" sont fixées chacune par une extrémité sur l'arbre 24 de façon à former une liaison pivot, l'autre extrémité restant libre, de sorte que les lanières peuvent se dresser par rapport à l'arbre lorsque celui-ci est entrainé en mouvement.

Alternativement, les lanières 25" étant très courtes, on pourrait prévoir qu'elles soient rigidement montées sur l'arbre 24.

L'ensemble des lanières est conformé de sorte que leur projections dans un plan parallèle au plan de la feuille pendant un mouvement de rotation soient distribuées de façon asymétrique autour de l'axe de l'arbre 24, c'est-à-dire qu'il n'est pas possible de trouver deux plans de symétrie distincts et passant par cet arbre.

Dans ce mode de réalisation, les lanières sont réparties à 360°.

Dans un mode de réalisation non représenté, les lanières sont circonscrites dans une plage angulaire s'étendant sur prés de 90°, et sur la plage angulaire symétrique par rapport à l'axe de rotation, aucune lanière n'est prévue.

L'arbre 24 est animé d'un mouvement oscillant, changeant de sens de rotation par exemple lorsque 240° sont parcourus.

L'arbre 24 est installé de façon excentrée par rapport à un axe central du réacteur, permettant ainsi de libérer de la place pour installer d'autres dispositifs 30.

Initialement, l'arbre 24 est orienté de sorte que ses plans de passage à vitesse nulle soient de part et d'autre d'un plan vertical passant par l'axe central du réacteur et par l'arbre, à des distances proches ou égales : ainsi, lors du mouvement oscillant, ce plan vertical est souvent traversé par au moins une lanière relativement longue 25, 25', ce qui favorise la déviation vers le centre du réacteur et la partie de la paroi du réacteur plus éloignée du dispositif 20. On peut ainsi parvenir à un chargement relativement dense du réacteur.

On pourra relever que dans cet exemple, toutes les lanières n'ont pas la même longueur (suivant la direction radiale, lorsqu'en mouvement rapide), les lanières 25 étant plus courtes que les lanières 25', et les lanières 25" proches de la paroi du réacteur étant encore plus courtes que les lanières 25'.

Dans le mode de réalisation de la figure 4, on a prévu un seul élément déflecteur 125, réalisé à partir d'une couche de matériau très souple, de forme peu ou prou circulaire, et installé autour de l'arbre 117 à la façon d'un excentrique.

L'aire de cet élément déflecteur, lorsque dressé autour de l'arbre ou lorsqu'à plat, sur un premier secteur angulaire 101, correspondant à l'angle θ1, est bien plus élevée que l'aire de cet élément déflecteur sur un deuxième secteur angulaire 102 symétrique du secteur 101 par rapport à l'axe de l'arbre 117 (et correspondant à l'angle θ1' de valeur donc égale à celle de θ1).

En appliquant un mouvement oscillant et en déversant préférentiellement les particules sur le secteur angulaire 101, on peut ainsi briser l'isotropie dans les déviations des particules et pallier à l'asymétrie causée par un positionnement excentré par rapport à l'axe central d'un réacteur.

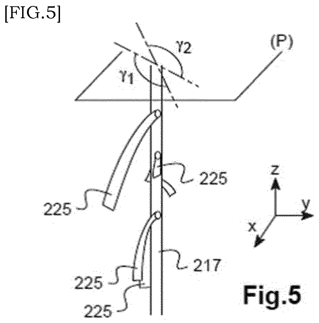

Dans le mode de réalisation de la figure 5, les lanières 225 sont disposées à des hauteurs diverses et ont des longueurs différentes les unes des autres.

En cas de mouvement rapide, les projections dans un plan (P) normal à l'axe de rotation des lanières correspondent à une surface plus élevée dans un secteur angulaire attaché à l'arbre ayant un angle ϕ1, que dans le secteur angulaire symétrique s'étendant sur un angle ϕ2 = ϕ1.

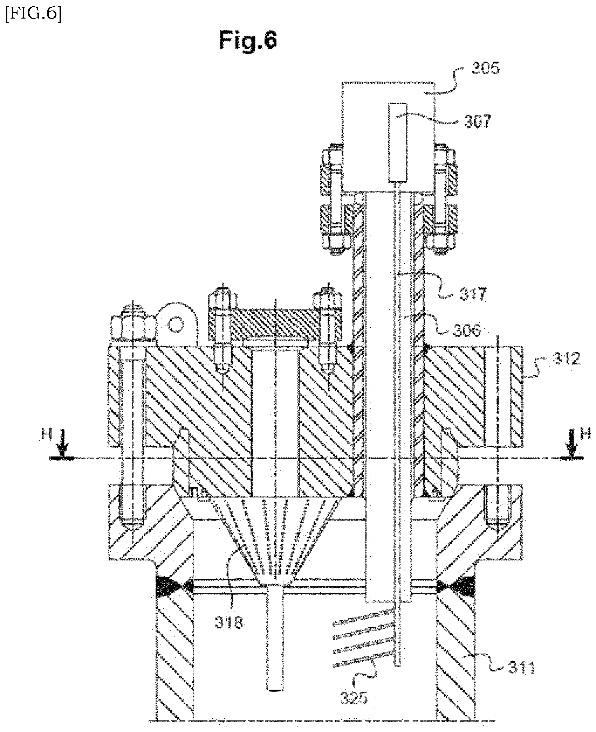

On a représenté sur la figure 6 une partie haute d'un ensemble selon un mode de réalisation, comprenant un réacteur, dont une partie seulement 311 est illustrée, un dispositif de distribution de particules solides et un thermocouple 318.

Le thermocouple 318 est solidaire d'un couvercle 312 recouvrant l'ouverture supérieure du réacteur.

Ce couvercle 312 définit un passage dans lequel peut être introduite une partie basse de trémie 306, de faible diamètre et solidarisée à une partie haute 305 de diamètre plus élevé.

Ce passage peut par exemple avoir un diamètre de l'ordre de la dizaine de centimètres, par exemple de 12 centimètres.

Le réacteur peut avoir un diamètre de par exemple 60 centimètres, et définir un volume de prés de 5 mètres cubes.

Grâce à ce couvercle 312, on limite les fuites et les dégâts occasionnés par les poussières, et en outre, dans la mesure où il n'est plus nécessaire d'ouvrir le réacteur, les temps de préparation sont réduits.

On fait passer au travers de la trémie un arbre 317 raccordé à un moteur à mouvement alternatif 307 et à des lanières en plastique rigide 325 montées articulées sur l'arbre 317.

La trémie 305,306 est installée déportée par rapport à un axe central de l'ouverture du réacteur.

Ces lanières 325 ne sont pas réparties sur 360° autour de l'axe de rotation de l'arbre 317, mais sur une portion angulaire limitée, par exemple de moins de 60°.

On installe le dispositif de distribution dans le réacteur de sorte que les lanières soient orientées au moins grossièrement vers le centre du réacteur.

La trémie 306 est remplie de catalyseur (non représenté), lequel est s'écoule via des ouvertures non représentées majoritairement au-dessus des lanières 325.

Le moteur 307 est piloté par un microcontrôleur non représenté, programmé pour faire imposer à l'arbre 317 solidaire du rotor du moteur 307 un mouvement oscillant.

On peut par exemple prévoir entre 50 et 500 périodes par seconde, par exemple 100 ou 200 périodes par seconde.

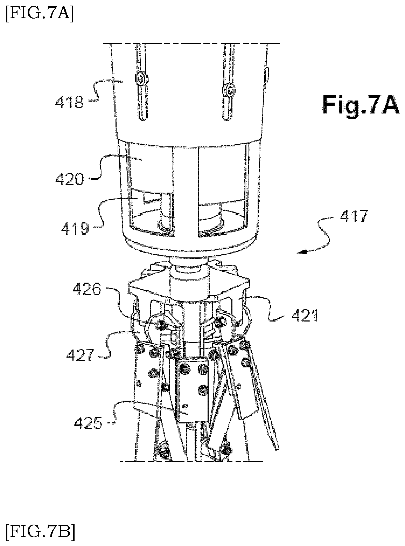

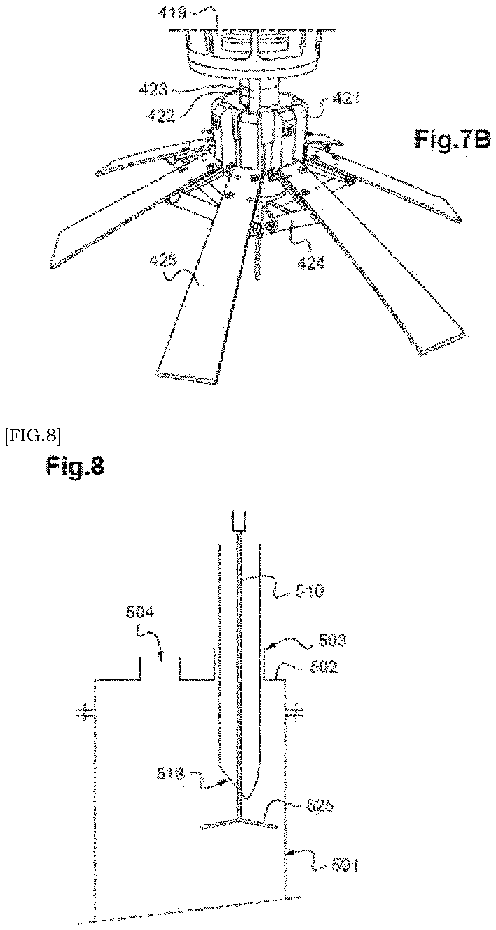

Dans le mode de réalisation des figures 7A et 7B, le dispositif de distribution 417 comprend une trémie 418 définissant plusieurs, ici quatre, ouvertures latérales 419.

Dans cet exemple, chaque ouverture 419 est équipée d'un volet obturant 420, monté coulissant sur des rails verticaux. La section efficace de chaque ouverture 419 peut donc être ajustée, de sorte que le jeu d'ouvertures 419 peut être réparti de façon asymétrique sur la périphérie de la trémie, de façon à favoriser l'évacuation des particules contenues dans la trémie suivant certaines directions.

Sous ces ouvertures 418, des éléments déflecteurs 425 en plastique rigide sont montés sur un élément tournant 421.

Cet élément tournant 421 coopère via des moyens de conversion non référencés avec un arbre traversant la trémie, positionné de façon centrale par rapport à la trémie, et entrainé en rotation par un moteur non représenté.

Ces moyens de conversion, comprenant notamment un galet, permettent de transformer le mouvement de rotation continu de l'arbre en un mouvement oscillant de l'élément tournant 421.

A l'extrémité de chaque élément déflecteur 425, une articulation définit une liaison pivot entre cet élément réflecteur et l'élément tournant 421.

Plus précisément, deux flasques 427 en regard l'une de l'autre sont solidarisées par des vis à l'élément déflecteur. Ces flasques 427 définissent des orifices pour recevoir une tige 426 traversant par ailleurs un alésage défini dans l'élément tournant 421.

Ainsi, grâce à cette liaison pivot, les éléments déflecteurs 425 peuvent passer d'une position d'introduction dans l'enceinte, comme illustré sur la figure 7A, à une position déployée, comme illustré sur la figure 7B.

Dans ce mode de réalisation, ce passage de l'une à l'autre positions est effectué grâce à un organe de tringlerie 422. Cet organe comprend plusieurs tiges articulées les unes aux autres, dont une tige centrale verticale 423 et des tiges radiales 424. Les tiges radiales 424 sont articulées aux éléments déflecteurs 245, et l'organe de tringlerie 422 est agencé de sorte qu'un mouvement vertical de la tige centrale 423 entraine en mouvement les tiges radiales 424 et donc les éléments déflecteurs 425, à la manière d'un parapluie.

Ainsi, on peut dresser les éléments déflecteurs installés dans l'enceinte préalablement au démarrage du moteur.

L'influence de la vitesse de rotation sur l'angle des éléments déflecteurs peut ainsi être réduite, et éventuellement nulle. La vitesse de rotation peut ainsi affecter la perméabilité aux particules, indépendamment de cet angle entre l'axe de rotation et la direction longitudinale attachée à un élément déflecteur.

Avantageusement, l'organe de tringlerie peut être conformé de sorte que la position angulaire d'au moins un élément déflecteur (par exemple de l'ensemble des éléments déflecteurs, ou bien encore de chaque élément déflecteur individuellement) puisse être réglable.

Il s'est avéré que ce dispositif, présentant des asymétries, est relativement performant en matière de chargement.

En effet, la Demanderesse arrive à simuler de façon relativement satisfaisante la densité de chargement en fonction d'un certain nombre de paramètres, dont les dimensions de l'enceinte, la vitesse de rotation, les dimensions des éléments déflecteurs, la taille des particules, le poids des particules, la masse de l'ensemble des particules chargées, etc. Lorsque de telles simulations sont effectuées préalablement à des tests réalisés avec un dispositif de distribution du type de celui de la figure 1, les résultats expérimentaux concordent avec les résultats obtenus par simulation.

Avec le dispositif de distribution de la figure 7B, on a effectué une simulation et un test, la simulation étant effectuée selon le procédé de simulation connu et avec des valeurs de paramètres (dimensions de l'enceinte, longueur moyenne des éléments déflecteurs, largeur des éléments déflecteur, etc.) correspondant aux valeurs effectives du test. On arrive de façon surprenant à une densité de chargement nettement supérieure à la densité simulée. La densité simulée, et attendue était de 1,462 tonne par mètre cube, tandis que l'expérience a amenée à une densité de 1,505 tonne par mètre cube, soit une augmentation de près de 15% alors que le dispositif de distribution occupait une position excentrée dans l'enceinte.

En référence à la figure 8, on a représenté un exemple de dispositif de distribution selon un autre mode de réalisation, dans lequel les éléments déflecteurs 525 ont tous la même longueur et sont entrainés dans un mouvement de rotation continu et à vitesse constante, tandis que la trémie définit une ouverture 518 asymétrique par rapport à l'axe de rotation de l'arbre 510. Les grains de catalyseur sont ainsi majoritairement déchargés vers le centre de l'enceinte, les éléments déflecteurs permettant d'obtenir une relative homogénéité.

On pourra relever que l'enceinte 501 est fermée sur le dessus par un couvercle 502 définissant un petit nombre de piquages, ici deux 503, 504. L'un 503 correspond au passage du dispositif de distribution, tandis que l'autre 504 peut correspondre au passage d'un dispositif de sonde, ou autre.

## Revendications

1. Dispositif de distribution (20) de particules solides pour charger lesdites particules solides une enceinte, comprenant :
- une trémie (21) d'alimentation en particules solides, définissant un jeu d'au moins une ouverture (29) d'évacuation des particules hors de la trémie sous l'effet de la gravité,
- un organe tournant (24) et un organe moteur couplé audit organe tournant pour entrainer en rotation ledit organe tournant autour d'un axe de rotation ayant une direction avec une composante suivant la direction du vecteur de gravité,
- en aval du jeu d'au moins une ouverture de la trémie d'alimentation, un jeu d'au moins un élément déflecteur (25, 25',25") porté par ledit organe tournant, dressé par rapport à l'axe de rotation ou susceptible d'être dressé par rapport à l'axe de rotation,
**caractérisé en ce que** le jeu d'au moins une ouverture de la trémie d'alimentation est conformé de façon asymétrique par rapport à l'axe de rotation, définissant au plus un plan de symétrie passant par l'axe de rotation.

2. Dispositif de distribution selon la revendication 1, dans lequel le jeu d'au moins un élément déflecteur est agencé de sorte que lorsque dressé par rapport à l'axe de rotation, les projections dudit jeu dans un plan normal à l'axe de rotation de l'organe tournant ont une distribution asymétrique autour dudit axe de rotation, définissant au plus un plan de symétrie passant par l'axe de rotation.

3. Dispositif de distribution selon l'une quelconque des revendications précédentes, dans lequel l'organe moteur est agencé pour que l'organe tournant (24 ; 117 ; 217 ; 317 ; 421) auquel il est couplé effectue un mouvement oscillant avec des inversions de sens de rotation aux extrémités d'une plage angulaire étendue sur au plus 350°.

4. Dispositif de distribution selon l'une quelconque des revendications précédentes, dans lequel au moins un élément déflecteur (25 ; 325 ; 425 ; 525) est rigide.

5. Dispositif de distribution selon l'une quelconque des revendications précédentes, dans lequel au moins un élément déflecteur (425) définit avec l'organe tournant (421) une liaison articulée, de sorte que cet élément déflecteur puisse passer d'une position d'introduction dans l'enceinte à une position dressée par rapport à l'axe de rotation indépendamment de la rotation de l'organe tournant.

6. Dispositif de distribution selon la revendication 5, comprenant en outre au moins un organe de tringlerie (419) coopérant avec au moins un élément déflecteur (425) de façon à pouvoir faire passer cet élément déflecteur de la position d'introduction dans l'enceinte à la position dressée par rapport à l'axe de rotation lorsqu'une tige (423) de l'organe de tringlerie est actionnée.

7. Dispositif de distribution selon l'une quelconque des revendications précédentes, dans lequel l'organe moteur comprend un moteur piloté pour effectuer un mouvement de rotation continu et des éléments de conversion du mouvement de rotation continu du moteur en un mouvement avec des variations de vitesse angulaire sur une plage angulaire de 360° ou moins.

8. Dispositif de distribution selon l'une quelconque des revendications précédentes, comprenant une pluralité d'éléments déflecteurs (25, 25',25" ; 225; 325 ; 425 ; 525), de préférence de tailles différentes.

9. Dispositif de distribution selon l'une quelconque des revendications précédentes, dans lequel les éléments déflecteurs sont répartis sur une plage angulaire de plus de 5° à moins de 320°, de préférence moins de 280°, plus préférentiellement moins de 180° et mieux encore moins de 120°.

10. Dispositif de distribution selon l'une quelconque des revendications précédentes, dans lequel l'axe de rotation est différent de l'axe de la trémie.

11. Dispositif de distribution selon l'une quelconque des revendications précédentes, dans lequel le jeu d'au moins une ouverture de la trémie d'alimentation comprend une pluralité d'ouvertures de tailles différentes, notamment des ouvertures plus grandes d'un côté de la trémie que de l'autre côté.

12. Procédé d'installation d'un dispositif de distribution de particules solides tel que défini dans l'une quelconque des revendications précédentes dans une enceinte présentant un orifice dans sa partie supérieure, dans lequel on fait passer par ledit orifice au moins l'organe tournant et le jeu d'au moins un élément déflecteur à une position excentrée par rapport à un axe central de l'enceinte.

13. Ensemble comprenant une enceinte (10 ; 311 ; 501) définissant un axe central vertical, et un dispositif de distribution (20 ; 417) tel que défini dans l'une quelconque des revendications 1 à 11 installé dans ladite enceinte via une ouverture de l'enceinte définie dans sa partie supérieure, à un emplacement excentré par rapport audit axe central.

14. Ensemble selon la revendication 13 dans lequel l'enceinte est un réacteur de réaction catalytique.

15. Méthode de chargement de particules solides dans une enceinte comprenant un axe central vertical, comprenant :
a) l'installation dans l'enceinte d'un dispositif de distribution (20 ; 417) tel que défini dans l'une quelconque des revendications 1 à 11 via une ouverture de l'enceinte située dans sa partie supérieure, de préférence à un emplacement excentré par rapport à l'axe central de l'enceinte; puis
b) l'entrainement en rotation de l'organe (24 ; 117 ; 217 ; 317 ; 421) tournant dudit dispositif ; et
c) le chargement des particules en les introduisant dans la trémie d'alimentation (21) dudit dispositif tout en maintenant l'organe tournant en rotation.

16. Méthode selon la revendication 15, **caractérisée en ce que** l'organe tournant effectue un mouvement oscillant avec des inversions de sens de rotation aux extrémités d'une plage angulaire étendue sur 350° ou moins, de préférence 330° ou moins, plus préférentiellement 320° ou moins, mieux 310° ou moins, et mieux encore 270° ou moins.
